# EUROPÄISCHE PATENTSCHRIFT

(11) **EP 4 301 542 B1**
(45) Veröffentlichungstag und Bekanntmachung des Hinweises auf die Patenterteilung: **15.01.2025**
(21) Anmeldenummer: 22713338.6
(22) Anmeldetag: 02.03.2022
(51) Int. Cl.: B23K 26/0622, B23K 26/364, B23K 26/359, B23K 103/16, B23K 101/42

(54) **VERFAHREN ZUM BEARBEITEN EINES METALL-KERAMIK-SUBSTRATS UND METALL-KERAMIK-SUBSTRAT**
METHOD FOR PROCESSING A METAL-CERAMIC SUBSTRATE, AND METAL-CERAMIC SUBSTRATE
PROCÉDÉ DE TRAITEMENT D'UN SUBSTRAT MÉTAL-CÉRAMIQUE ET SUBSTRAT MÉTAL-CÉRAMIQUE

(30) Priorität: 03.03.2021 DE 102021105109
(43) Veröffentlichungstag der Anmeldung: 10.01.2024
(73) Patentinhaber: Rogers Germany GmbH, 92676 Eschenbach (DE)
(72) Erfinder: KOHL, Thomas, 91275 Auerbach (DE); RETTINGER, Bernhard, 92670 Windischeschenbach (DE)
(74) Vertreter: Müller Schupfner & Partner Patent- und Rechtsanwaltspartnerschaft mbB (Muc)
(86) Internationale Anmeldenummer: PCT/EP2022/055290
(87) Internationale Veröffentlichungsnummer: WO 2022/184773

(56) Entgegenhaltungen:
- EP-B1- 2 315 508
- DE-A1- 102013 104 055

## Beschreibung

Die vorliegende Erfindung betrifft ein Verfahren zum Bearbeiten eines Metall-Keramik-Substrats, und ein Metall-Keramik-Substrat mit einer Sollbruchvertiefung. Elektronikmodule sind aus dem Stand der Technik, beispielsweise als Leistungselektronikmodule, hinlänglich bekannt. Solche Elektronikmodule nutzen typischerweise schaltbare bzw. steuerbare Elektronikbauteile, die auf einem gemeinsamen Metall-Keramik-Substrat über Leiterbahnen miteinander verschaltet sind. Wesentliche Bestandteile des Metall-Keramik-Substrats sind dabei eine Isolationsschicht, die im Falle des Metall-Keramik-Substrats aus einem eine Keramik umfassenden Material gefertigt ist, und eine Metallisierungsschicht, die zur Bildung von Leiterbahnen vorzugsweise strukturiert und an einer Bauteilseite des Metall-Keramik-Substrats ausgebildet ist.

Typischerweise wird dabei ein Metall-Keramik-Substrat als Großkarte realisiert, die nach oder vor dem Strukturieren in kleinere Metall-Keramik-Substrate vereinzelt wird. Solche Großkarten werden dazu mittels Laserlichts zur Herstellung von Sollbruchvertiefungen und/oder Trennstellen bearbeitet. Anschließend lassen sich die jeweiligen Metall-Keramik-Substrate aus der Großkarte, z. B. durch Herausbrechen, vereinzelt bereitstellen. Hierbei hat sich die Verwendung von Ultrakurzpulslasern als vorteilhaft erwiesen, wie es beispielsweise in der WO 2017 / 108 950 A1 beschrieben ist. Aus der DE 10 2013 104 055 A1 , welches die Basis für den Oberbegriff des Anspruchs 1 bildet, ist ferner ein weiteres Verfahren zum Herstellen von Sollbruchlinien in Metall-Keramik-Substraten bekannt. Die EP 2 315 508 B1 betrifft ebenfalls das Herstellen von Sollbruchlinien.

Ausgehend von diesem Stand der Technik macht es sich die vorliegende Erfindung zur Aufgabe, das Herstellen von Sollbruchvertiefungen in einem Metall-Keramik-Substrat, insbesondere in einer Großkarte, zu verbessern.

Diese Aufgabe wird gelöst durch ein Verfahren zur Bearbeitung eines Metall-Keramik-Substrats gemäß Anspruch 1 und ein Metall-Keramik-Substrat gemäß Anspruch 8. Weitere Ausführungsbeispiele sind den Unteransprüchen und der Beschreibung zu entnehmen.

Gemäß einem ersten Aspekt der vorliegenden Erfindung ist ein Verfahren zum Bearbeiten eines Metall-Keramik-Substrats vorgesehen, umfassend:
- Bereitstellen eines Metall-Keramik-Substrats und
- Ausbilden einer Sollbruchvertiefung im Metall-Keramik-Substrat,
wobei die Sollbruchvertiefung entlang ihrer Verlaufsrichtung mindestens einen ersten Abschnitt mit einer ersten Tiefe und mindestens einen zweiten Abschnitt mit einer zweiten Tiefe aufweist, wobei eine zweite Tiefe realisiert wird, die sich von der ersten Tiefe unterscheidet.

Gegenüber den aus dem Stand der Technik bekannten Sollbruchvertiefungen ist es erfindungsgemäß vorgesehen, dass mit dem ersten Abschnitt und dem zweiten Abschnitt eine erste Tiefe und eine zweite Tiefe für die Sollbruchvertiefung bereitgestellt werden, wodurch ein Boden der Sollbruchvertiefung in Richtung der Verlaufsrichtung der Sollbruchvertiefung moduliert ist. Es hat sich herausgestellt, dass es durch eine entsprechende Modulation des Bodens der Sollbruchvertiefung, insbesondere mit einem ersten Abschnitt, der eine erste Tiefe aufweist, und einem zweiten Abschnitt, der eine sich von der ersten Tiefe unterscheidende zweite Tiefe aufweist, möglich ist, dass die entsprechenden Metall-Keramik-Substrate einerseits möglichst fehlerfrei zu brechen sind und andererseits eine wünschenswerte Stabilität aufweisen, die einen sicheren Transport gewährleisten, ohne dass die Metall-Keramik-Substrate während des Transports ungewollt zerbrechen, insbesondere im Bereich der Sollbruchvertiefung. Dadurch wird insgesamt die Menge an Ausschüssen von Metall-Keramik-Substraten, die durch ein ungewolltes bzw. ungezieltes Brechen fehlerhaft zerbrechen, reduziert. Dabei handelt es sich vorzugsweise um Metall-Keramik-Substrate in Form von Großkarten.

Insbesondere ist es vorgesehen, dass die erste Tiefe und/oder zweite Tiefe vom Boden der Sollbruchvertiefung im ersten Abschnitt bzw. zweiten Abschnitt in einer senkrecht zu Haupterstreckungsebene verlaufenden Richtung bis hin zu einer gedachten Ebene bemessen wird, durch die auch die Oberseite des Metall-Keramik-Substrats bzw. die Keramikschicht verläuft. Unter einem ersten Abschnitt und zweitem Abschnitt ist insbesondere ein solcher Abschnitt am Boden der Sollbruchvertiefung gemeint, der keinen schrägen Verlauf gegenüber der Haupterstreckungsebene aufweist. Dabei kann der erste Abschnitt und/oder der zweite Abschnitt auch punktförmig sein, insbesondere dann, wenn sich an dem zweiten Abschnitt unmittelbar aufeinanderfolgend jeweils ein schräger Verlauf des Bodens anschließt. Beispielsweise kann es sich auch um einen zick-zack-förmigen Verlauf am Boden der Sollbruchvertiefung handeln. Vorzugsweise ist es vorgesehen, dass zwischen dem ersten Abschnitt und dem zweiten Abschnitt jeweils ein Schrägbereich angeordnet ist, in dem der Boden der Sollbruchvertiefung schräg zur Haupterstreckungsebene verläuft.

Mit anderen Worten: zum ersten Abschnitt und zweiten Abschnitt zählen insbesondere nicht solche Abschnitte der Sollbruchvertiefung, in denen der Boden der Sollbruchvertiefung schräg gegenüber der Haupterstreckungsebene verläuft. Die nicht zum ersten Abschnitt und zweiten Abschnitt zählenden Bodenverläufe der Sollbruchvertiefung, d. h. die Schrägbereiche, können beispielsweise senkrecht zu einer Haupterstreckungsebene verlaufen und/oder sich unter einem Winkel zwischen 30° und 60°, vorzugsweise 40° und 50° und besonders bevorzugt zwischen 42° und 48° zur Haupterstreckungsebene erstrecken. Insbesondere formen die jeweils schräg verlaufenden Abschnitte im Boden der Sollbruchvertiefung eine Neigung aus, die entlang der Verlaufsrichtung im Wesentlichen konstant ist, d. h. insbesondere nicht mehr als 10%, bevorzugt 5%, besonders bevorzugt 2% von einem Mittelwert aller Neigungswinkel abweichen.

Vorzugsweise nimmt die erste Tiefe einen Wert zwischen 0,01 mm und 0,12 mm bevorzugt zwischen 0,02 mm und 0,1 mm und besonders bevorzugt einen Wert zwischen 0,02 mm und 0,08 mm an, während die zweite Tiefe einen Wert zwischen 0,01 mm und 0,16 mm bevorzugt zwischen 0,02 mm und 0,12 mm und besonders bevorzugt einen Wert zwischen 0,02 mm und 0,1 mm, annimmt.

Ferner umfasst das Metall-Keramik-Substrat mindestens eine Metallschicht, die an einer Oberseite eines Keramikelements bzw. einer Keramikschicht stoffschlüssig angebunden ist, wobei sich die Metallschicht und das Keramikelement entlang einer Haupterstreckungsebene erstrecken und entlang einer senkrecht zur Haupterstreckungsebene verlaufenden Stapelrichtung übereinander angeordnet sind.

Als Materialien für die Metallschicht ist Kupfer, Aluminium, Molybdän, Wolfram und/oder deren Legierungen wie z. B. CuZr, AlSi oder AlMgSi, sowie Laminate wie CuW, CuMo, CuAl und/oder AlCu oder MMC (metal matrix composite), wie CuW, CuMo oder AlSiC, vorstellbar. Weiterhin ist bevorzugt vorgesehen, dass die Metallschicht am gefertigten Metall-Keramik-Substrat, insbesondere als Bauteilmetallisierung, oberflächenmodifiziert ist. Als Oberflächenmodifikation ist beispielsweise eine Versiegelung mit einem Edelmetall, insbesondere Silber; und/oder Gold, oder (electroless) Nickel oder ENIG *("electroless nickel immersion gold")* oder ein Kantenverguss an der Metallschicht zur Unterdrückung einer Rissbildung bzw. -weitung denkbar.

Vorzugsweise weist das Keramikelement Al₂O₃, Si₃N₄, AIN, eine HPSX-Keramik (d. h. eine Keramik mit einer Al₂O₃- Matrix, die einen x-prozentigen Anteil an ZrO₂ umfasst, beispielsweise Al₂O₃ mit 9% ZrO₂ = HPS9 oder Al₂O₃ mit 25% ZrO₂ = HPS25), SiC, BeO, MgO, hochdichtes MgO (> 90% der theoretischen Dichte), TSZ (tetragonal stabilisiertes Zirkonoxid) als Material für die Keramik auf. Es ist dabei auch vorstellbar, dass das Keramikelement als Verbund- bzw. Hybridkeramik ausgebildet ist, bei der zur Kombination verschiedener gewünschter Eigenschaften mehrere Keramikschichten, die sich jeweils in Hinblick auf ihre materielle Zusammensetzung unterscheiden, übereinander angeordnet und zu einem Keramikelement zusammengefügt sind. Vorzugsweise wird eine möglichst wärmeleitfähige Keramik für einen möglichst geringen Wärmewiderstand verwendet.

Dabei wird vorzugsweise die Metallschicht an die Isolierschicht mittels eines AMB-Verfahrens und/oder ein DCB-Verfahren und/oder einen heißisostatischen Pressen stoffschlüssig angebunden. Vorstellbar ist auch die Anbindung mittels eines Diffisionsbondingverfahren oder durch ein Dickfilmschichtverfahren.

Unter einem "DCB-Verfahren" (Direct-Copper-Bond-Technology) oder einem "DAB-Verfahren" (Direct-Aluminium-Bond-Technology) versteht der Fachmann ein solches Verfahren, das beispielsweise zum Verbinden von Metallschichten oder - blechen (z. B. Kupferblechen oder -folien oder Aluminiumblechen oder -folien) miteinander und/oder mit Keramik oder Keramikschichten dient, und zwar unter Verwendung von Metall- bzw. Kupferblechen oder Metall- bzw. Kupferfolien, die an ihren Oberflächenseiten eine Schicht oder einen Überzug (Aufschmelzschicht), aufweisen. Bei diesem beispielsweise in der US 3 744 120 A oder in der DE23 19 854 C2 beschriebenen Verfahren bildet diese Schicht oder dieser Überzug (Aufschmelzschicht) ein Eutektikum mit einer Schmelztemperatur unter der Schmelztemperatur des Metalls (z. B. Kupfers), so dass durch Auflegen der Folie auf die Keramik und durch Erhitzen sämtlicher Schichten diese miteinander verbunden werden können, und zwar durch Aufschmelzen des Metalls bzw. Kupfers im Wesentlichen nur im Bereich der Aufschmelzschicht bzw. Oxidschicht.

Insbesondere weist das DCB-Verfahren dann z. B. folgende Verfahrensschritte auf:
- Oxidieren einer Kupferfolie derart, dass sich eine gleichmäßige Kupferoxidschicht ergibt;
- Auflegen des Kupferfolie auf die Keramikschicht;
- Erhitzen des Verbundes auf eine Prozesstemperatur zwischen etwa 1025 bis 1083°C, z. B. auf ca. 1071°C;
- Abkühlen auf Raumtemperatur.

Unter einem Aktivlot-Verfahren z. B. zum Verbinden von Metallschichten oder Metallfolien, insbesondere auch von Kupferschichten oder Kupferfolien mit Keramikmaterial ist ein Verfahren zu verstehen, welches speziell auch zum Herstellen von Metall-Keramik-Substraten verwendet wird, wird bei einer Temperatur zwischen ca.650-1000°C eine Verbindung zwischen einer Metallfolie, beispielsweise Kupferfolie, und einem Keramiksubstrat, beispielsweise Aluminiumnitrid-Keramik, unter Verwendung eines Hartlots hergestellt, welches zusätzlich zu einer Hauptkomponente wie Kupfer, Silber und/oder Gold auch ein Aktivmetall enthält. Dieses Aktivmetall, welches beispielsweise wenigstens ein Element der Gruppe Hf, Ti, Zr, Nb, Ce ist, stellt durch chemische Reaktion eine Verbindung zwischen dem Lot und der Keramik her, während die Verbindung zwischen dem Lot und dem Metall eine metallische Hartlöt-Verbindung ist. Alternativ ist zur Anbindung auch ein Dickschichtverfahren vorstellbar.

Vorzugsweise ist es vorgesehen, dass bei einem heißisostatischem Pressen ein Behälter, insbesondere ein Metallbehälter, in einer Heiz- und Druckvorrichtung einem Gasdruck zwischen 100 und 2000 bar, bevorzugt 150 bar und 1200 bar und besonders bevorzugt 300 und 1000 bar und einer Prozesstemperatur von 300 °C bis zu einer Schmelztemperatur ein Metalllage und/oder einer weiteren Metalllage, insbesondere bis zu einer Temperatur unterhalb der Schmelztemperatur der Metalllage und/oder der weiteren Metalllage, ausgesetzt wird. Es hat sich in vorteilhafter Weise herausgestellt, dass es so möglich ist, eine Metallschicht, d. h. die Metalllage und/oder die weitere Metalllage des Metallbehälters, an das Keramikelement anzubinden, ohne die erforderlichen Temperaturen eines Direktmetallanbindungsverfahrens, beispielsweise eines DCB- oder einem DAB-Verfahrens, und/oder ohne ein Lotbasismaterial, das beim Aktivlöten verwendet wird, zu erreichen. Darüber hinaus gestattet das Nutzen bzw. die Verwendung eines entsprechenden Gasdrucks die Möglichkeit, möglichst lunkerfrei, d. h. ohne Gaseinschlüsse zwischen Metallschicht und Keramikelement ein Metall-Keramik-Substrat zu fertigen. Insbesondere finden Prozessparameter Verwendung, die in der DE 10 2013 113 734 A1 erwähnt werden und auf die hiermit explizit im Zusammenhang mit dem heißisostatischen Pressen Bezug genommen wird.

Vorzugsweise ist es vorgesehen, dass während der Erzeugung der Sollbruchvertiefung entstehende Teilchen mittels einer Absaugvorrichtung abgesaugt werden. Derartige Absaugvorrichtungen veranlassen einen Saugstrom, der insbesondere derart konfiguriert ist, dass die während der Bearbeitung entstehenden, insbesondere durch Sublimation entstehenden, Keramikteilchen, von der Oberseite des Metall-Keramik-Substrats abgesaugt werden. Vorzugsweise ist dabei die Absaugvorrichtung im Wesentlichen auf Höhe des Metall-Keramik-Substrats angeordnet und veranlasst einen Saugstrom, der im Wesentlichen parallel zur Haupterstreckungsebene des Substrats verläuft, insbesondere in der Nähe der Substratoberfläche. Dadurch werden die durch Sublimation entstandenen Keramikteilchen während der Behandlung mit den Laserpulsen zur Seite hin abgesaugt.

Vorzugsweise ist es bevorzugt vorgesehen, dass das Metall-Keramik-Substrat während der Ausbildung der Sollbruchvertiefung ortsfest angeordnet ist und/oder dass das Laserlicht zur Ausbildung der Sollbruchvertiefung über das Metall-Keramik-Substrat bewegt wird, d. h. das Metall-Keramik-Substrat ist während der Bearbeitung zwecks der Herstellung von Sollbruchvertiefungn zum Vereinzeln der Metall-Keramik-Substrate bevorzugt ortsfest angeordnet. "Ortsfest" bedeutet entweder an einem Ort befestigt oder dreh-/schwenkbar an einem Ort befestigt. Hierzu wird beispielsweise das Metall-Keramik-Substrat, das vorzugsweise als Großkarte bereitgestellt wird, in einem Halteelement fixiert. Ein solches Halteelement umfasst beispielsweise eine Saugvorrichtung, die während des Verfahrens durch einen entsprechenden Unterdruck an der Unterseite des Metall-Keramik-Substrats das Metall-Keramik-Substrat im Halteelement fixiert. Durch das Fixieren bzw. das ortsfeste Anordnen des Metall-Keramik-Substrats während der Herstellung der Sollbruchvertiefungn lassen sich in vorteilhafter Weise feiner strukturierte und präziser geformte Sollbruchvertiefungn erzeugen, insbesondere, wenn eine mehrfache Überfahrt des Laserstrahls über das Metall-Keramik-Substrat vorgesehen ist. Dabei ist es vorzugsweise vorgesehen, dass ein Laserstrahl des UKP-Systems entlang der geplanten Verläufe der Sollbruchvertiefungn gefahren wird, vorzugsweise in mehreren Überfahrten. Dabei weist der über das Metall-Keramik-Substrat verfahrene Laserstrahl eine Bearbeitungsgeschwindigkeit zwischen 0,1 und 2 m pro Sekunde, bevorzugt zwischen 0,8 und 1,5 m pro Sekunde auf.

Erfindungsgemäß ist es vorgesehen, dass die ersten Abschnitte und die zweiten Abschnitte außerhalb von Kreuzungspunkten zweier Sollbruchvertiefungen realisiert werden. Dadurch wird das vorteilhafte Bruchverhalten über die gesamte Großkarte sichergestellt und es wird nicht nur in Bereichen von übereinanderliegenden Kreuzungspunkten eine gezielte Schwächung eingestellt. Insbesondere ist es vorgesehen, dass der erste Abschnitt bzw. der zweite Abschnitt nicht ausschließlich in Kreuzungspunkten zweier Sollbruchvertiefungen ausgebildet ist. Insbesondere verlaufen sich in einem Kreuzungspunkt schneidende Sollbruchvertiefungen senkrecht zueinander, um die Großkarte mittels der Sollbruchvertiefungen schachbrettartig aufzuteilen.

Vorzugsweise ist es vorgesehen, dass ein Verhältnis einer ersten Tiefe T1 zur zweiten Tiefe T2 zwischen 0.05 und 1, bevorzugt zwischen 0.2 und 0.8 und besonders bevorzugt zwischen 0.4 und 0.6 beträgt. Es hat sich herausgestellt, dass insbesondere bei einer zweiten Tiefe, die in etwa doppelt so groß wie die erste Tiefe, ein für die Handhabung besonders gut geeignetes Metall-Keramik-Substrat mit Sollbruchvertiefung bereitgestellt werden kann, das gleichzeitig ein ausreichend gutes Brechverhalten entlang der Sollbruchvertiefung aufweist.

Erfindungsgemäß ist es vorgesehen, dass die erste Tiefe im ersten Abschnitt über eine in Verlaufsrichtung der Sollbruchvertiefung bemessene erste Länge und/oder die zweite Tiefe im zweiten Abschnitt über eine in Verlaufsrichtung der Sollbruchvertiefung bemessene zweite Länge im Wesentlichen konstant bleibt. Das Fertigen einer entsprechenden Modulation bei der insbesondere die erste Länge und/oder die zweite Länge über einen gewissen Zeitraum konstant ist, kann ohne großen Aufwand und schnell realisiert werden.

Vorzugsweise nimmt die erste Länge einen Wert zwischen 0,05 mm und 5,0 mm, bevorzugt zwischen 0,05 mm und 2,0 mm und besonders bevorzugt einen Wert zwischen 0,05 mm und 0,01 mm, an, während die zweite Länge einen Wert zwischen 0,05 mm und 5,0 mm, bevorzugt zwischen 0,05 mm und 2,0 mm und besonders bevorzugt einen Wert zwischen 0,05 mm und 0,01 mm, annimmt.

Weiterhin ist es besonders bevorzugt vorgesehen, dass ein Verhältnis der ersten Länge zur zweiten Länge kleiner als 1,5, bevorzugt kleiner als 0,5 und besonders bevorzugt kleiner als 0,25 ist.

Insbesondere ist es besonders bevorzugt vorgesehen, wenn die erste Länge in etwa der zweiten Länge entspricht, wodurch sich ein besonders symmetrischer Verlauf des Bodens der Sollbruchvertiefung in Hinblick auf seine Modulation ergibt. Insbesondere umfasst das Intervall auch solche Verhältnisse, bei denen der erste Abschnitt punktförmig ist und somit das Verhältnis im Wesentlichen 0 ist. In diesen Ausführungsvarianten bildet der Bodenverlauf eine im Wesentlichen dreieckförmige Form in einem Querschnitt, der senkrecht zur Haupterstreckungsebene und durch die Verlaufsrichtung verläuft.

Besonders bevorzugt ist es vorgesehen, wenn am Metall-Keramik-Substrat an Oberseite und Unterseite eine Sollbruchvertiefung hergestellt werden, die im Wesentlichen in einer senkrecht zur Haupterstreckungsebene verlaufenden Richtung deckungsgleich zueinander angeordnet sind. Dabei ist es vorstellbar, dass die ersten Abschnitt und die zweiten Abschnitte an der Oberseite an derselben Position oder in Verlaufsrichtung gesehen versetzt zueinander angeordnet sind zu den entsprechenden ersten Abschnitten und zweiten Abschnitten an der Unterseite.

Vorzugsweise ist es vorgesehen, dass sich der erste Abschnitt und der zweite Abschnitt periodisch abwechseln. Mit anderen Worten: entlang der Verlaufsrichtung wechseln sich abgesehen von den verbindenden Schrägverläufen der Böden der Sollbruchvertiefung der erste Abschnitt und der zweite Abschnitt durchgehend ab. Dabei sind vorzugsweise zwischen dem ersten Abschnitt und dem zweiten Abschnitt jeweils Schrägbereich ausgebildet.

Vorzugsweise ist es vorgesehen, dass die Sollbruchvertiefung in einer senkrecht zur Verlaufsrichtung verlaufenden Richtung eine dritte Tiefe aufweist, die sich vorzugsweise von der ersten und/oder zweiten Tiefe sich unterscheidet. Dadurch bildet sich beispielsweise eine W-förmige bzw. W-artige Profilierung der Sollbruchvertiefung in einer Senkrechte zur Verlaufsrichtung verlaufenden Ebene bzw. Querschnitt aus. Eine solche Vertiefung lässt sich beispielsweise dadurch erzielen, dass das Laserlicht bei einigen wenigen Überfahrten leicht versetzt ist gegenüber den weiteren Überfahrten mit dem Laserlicht, die zu der Ausbildung der Sollbruchvertiefung führen.

Vorzugsweise ist es vorgesehen, dass die Sollbruchvertiefung im ersten Abschnitt oder zweiten Abschnitt in einer parallel zur Verlaufsrichtung verlaufenden Ebene eine trapezartige oder dreieckartige Form aufweist. Dadurch ergibt sich ein im Wesentlichen vorteilhafter Bodenverlauf für die Sollbruchvertiefung.

Vorzugsweise ist es vorgesehen, dass die Sollbruchvertiefung durch Bearbeiten mittels Laserlicht, insbesondere eines Ultrakurzpulslasers, hergestellt wird, wobei im Rahmen der Ausbildung der Sollbruchvertiefung das Metall-Keramik-Substrat vor dem Bearbeiten, während des Bearbeitens, und/oder nach dem Bearbeiten einer Temperaturbehandlung unterzogen wird, wobei insbesondere ein Abkühlen, insbesondere nach dem Bearbeiten, mit einer Abkühlrate von weniger als 4° pro Minute, bevorzugt weniger als 2° pro Minute und besonders bevorzugt weniger als 0,5° pro Minute erfolgt. Es hat sich herausgestellt, dass durch eine gezielte Temperaturbehandlung, insbesondere ein gezieltes Abkühlen des Metall-Keramik-Substrats, thermomechanische Spannungen im hergestellten Metall-Keramik-Substrat vermieden werden können, wodurch dauerhaft die Temperaturwechselbeständigkeit des zerbrochenen Metall-Keramik-Substrats verbessert werden kann.

Vorzugsweise handelt es sich bei dem UKP-Laser um eine Laserquelle, die Lichtpulse mit einer Pulsdauer von 0,1 bis 800 ps, bevorzugt 1 bis 500 ps, besonders bevorzugt von 10 bis 50 ps bereitstellt. Es hat sich als besonders vorteilhaft herausgestellt, mittels derartiger Pulse, insbesondere mit Bearbeitungsgeschwindigkeiten zwischen 0,2 und 8 m/s, Sollbruchvertiefungn bzw. Sollbruchstellen herzustellen, die ein besonders günstiges Verhältnis zwischen aufgeschmelzter Keramik und Rissbildung innerhalb der Sollbruchvertiefungn aufweisen, wodurch ein besonders zuverlässiges bzw. erfolgreiches Brechen entlang der Sollbruchvertiefungn gewährleistet werden kann, ohne dass Schäden beim Brechen am vereinzelten Metall-Keramik-Substrat entstehen. Insbesondere im Vergleich zum Bearbeiten mit einem CO₂-Laser werden geringere Spannungen in das Metall-Keramik-Substrat eingebracht, die die mechanischen Eigenschaften der Keramik beeinflussen können und sich andernfalls, induziert durch die Metallisierungen des Metall-Keramik-Substrats, leicht ausbreiten können. Dies kann entweder einen Ausschuss verursachen oder zumindest die Lebensdauer des Metall-Keramik-Substrats beeinflussen. Es hat sich gezeigt, dass dieser Effekt der Nutzung von Ultrakurzpulslaserlicht besonders ausgeprägt ist, wenn die Nutzung von Pulslaserlicht von der Temperaturbehandlung begleitet wird. Insbesondere lässt sich die Erfolgsrate beim Brechen der Metall-Keramik-Substrate weiter verbessern.

Ein weiterer Gegenstand der vorliegenden Erfindung ist ein Metall-Keramik-Substrat mit einer Sollbruchvertiefung, hergestellt mit dem erfindungsgemäßen Verfahren. Alle für das Verfahren beschriebenen Eigenschaften und Vorteile gelten analog für das Metall-Keramik-Substrat. Insbesondere zeichnet sich das Metall-Keramik-Substrat, insbesondere als Großkarte, dadurch aus, dass es einen ersten Abschnitt mit einer ersten Tiefe und einen zweiten Abschnitt mit einer zweiten Tiefe aufweist, wobei die erste Tiefe sich von der zweiten Tiefe unterscheidet.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden.

Es zeigt:
- **Fig.1:**: schematische Darstellung eines Verfahrens zum Bearbeiten eines Metall-Keramik-Substrats gemäß einer ersten beispielhaften Ausführungsform der vorliegenden Erfindung und
- **Fig. 2a:**: Sollbruchvertiefung gemäß dem Stand der Technik
- **Fig. 2b:**: Sollbruchvertiefung gemäß einer zweiten beispielhaften Ausführungsform der vorliegenden Erfindung und
- **Fig. 2c:**: Sollbruchvertiefung gemäß einer dritten beispielhaften Ausführungsform der vorliegenden Erfindung

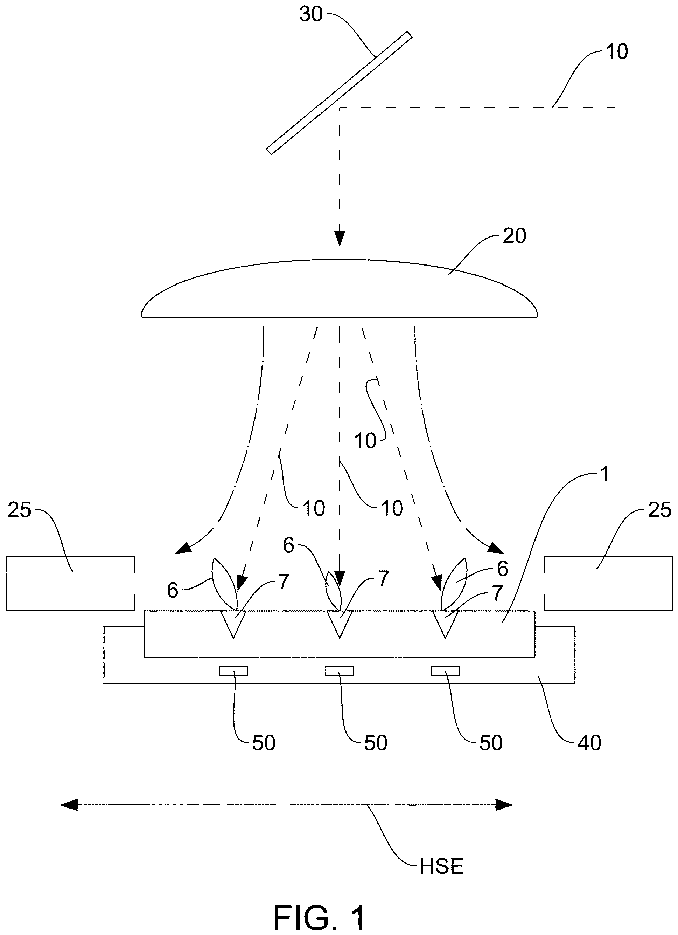

In **Figur 1** ist schematisch ein Verfahren zum Bearbeiten eines Metall-Keramik-Substrats 1 gemäß einer ersten bevorzugten Ausführungsform der vorliegenden Erfindung dargestellt. Solch ein Metall-Keramik-Substrat 1 dient vorzugsweise jeweils als Träger von elektronischen bzw. elektrischen Bauteile, die an das Metall-Keramik-Substrat 1 anbindbar sind. Wesentliche Bestandteile eines solchen Metall-Keramik-Substrats 1 sind eine sich entlang einer Haupterstreckungsebene HSE erstreckende Keramikschicht bzw. ein Keramikelement und eine an der Keramikschicht angebundene Metallschicht. Die Keramikschicht ist aus mindestens einem eine Keramik umfassenden Material gefertigt. Die Metallschicht und die Keramikschicht sind dabei entlang einer senkrecht zur Haupterstreckungsebene HSE verlaufenden Stapelrichtung übereinander angeordnet und in einem gefertigten Zustand über eine Anbindungsfläche zumindest bereichsweise miteinander stoffschlüssig verbunden. Vorzugsweise wird die Metallschicht dann zur Bildung von Leiterbahnen oder Anbindungsstellen für die elektrischen Bauteile strukturiert. Beispielsweise wird diese Strukturierung in die Metallschicht eingeätzt. Im Vorfeld muss allerdings eine dauerhafte Bindung, insbesondere stoffschlüssige Anbindung, zwischen der Metallschicht und der Keramikschicht gebildet werden.

Um die Metallschicht dauerhaft an die Keramikschicht anzubinden, umfasst eine Anlage zur Herstellung des Metall-Keramik-Substrats, insbesondere in einem DCB oder DAB - Anbindungsverfahren, einen Ofen, in dem ein gestapelte Anordnung aus einer Keramikschicht und mindestens einer Metallschicht erhitzt wird und so die Bindung erzielt wird. Beispielsweise handelt es sich bei der Metallschicht um eine aus Kupfer gefertigte Metallschicht, wobei die Metallschicht und die Keramikschicht mit einem DCB (Direct-Copper-Bonding) - Anbindungsverfahren miteinander verbunden werden. Alternativ lässt sich die Metallschicht über ein Aktivlötverfahren bzw. über ein Dickschichtfilmverfahren an die Keramikschicht anbinden. Vorstellbar ist es auch eine Anbindung mittels eines heißisostatischen Verfahrens oder mittels einer Diffusionsanbindung.

Nach dem Anbinden, insbesondere mittels eines DCB-Verfahrens, eines Aktlötverfahrens, einem Diffusionsanbindungsverfahrens, eines heißisostatischen Pressen, und/oder einem Dickschichtfilmverfahren, wird das Metall-Keramik-Substrat 1 als Großkarte bereitgestellt. Derartige Großkarten sind im Folgeprozess zu vereinzeln, um jeweils vereinzelte Metall-Keramik-Substrate 1 bereitzustellen. Vorzugsweise ist es vorgesehen, für ein solches Vereinzeln, die Großkarte mittels Laserlicht 10, insbesondere mittels Ultrakurzpulslaserlicht, zu bearbeiten. Dabei ist es möglich, sofort eine Trennung mittels des Laserlichts 10 zu realisieren und/oder eine Sollbruchvertiefung 7 zu bilden, entlang der im Folgeprozess die Großkarte unter Ausbildung der vereinzelten Metall-Keramik-Substrate 1 zerbrochen wird. Unter einem Ultrakurzpulslaser versteht der Fachmann insbesondere solche Laserquellen, die Laserpulse emittieren, deren Pulslänge kleiner als eine Nanosekunde sind. Vorzugsweise beträgt die Pulsdauer zwischen 0,1 und 100 ps. Ferner ist es vorstellbar, dass die Pulsdauer im Femtosekundenbereich liegt, d.h. die Pulslänge 0,1 bis 100 fs beträgt. Alternativ ist auch die Nutzung eines CO₂ Lasers vorstellbar. In dem in Figur 1 dargestellten Ausführungsbeispiel ist das Metall-Keramik-Substrat 1 in einem Halteelement 40 angeordnet.

Dabei ist es insbesondere vorgesehen, dass das Metall-Keramik-Substrat 1 mittels des Halteelements 40 ortsfest angeordnet ist. Um eine Sollbruchvertiefung 7 zu erzeugen, die insbesondere einen bestimmten Verlauf entlang einer Verlaufsrichtung V über das Metall-Keramik-Substrat 1 aufweist, ist es vorgesehen, dass Laserlicht 10 bzw. ein Laserstrahl über das Metall-Keramik-Substrat 1 verfahren wird. Mit anderen Worten: Statt das Metall-Keramik-Substrat 1 relativ zum Laserlicht 10 bzw. dessen Ausrichtung zu bewegen, ist es bevorzugt vorgesehen, die Ausrichtung des Laserlichts 10 bzw. Laserstrahls derart vorzunehmen, dass das über das Metall-Keramik-Substrat 1 hinweggefahrene Laserlicht 10 an den jeweiligen Auftreffpunkten eine Sollbruchvertiefung 7 und/oder eine Trenn- bzw. Schnittlinie erzeugt. Dabei ist es vorstellbar, dass die Sollbruchvertiefung 7 durchgezogen ist und/oder unterbrochen, d. h. die Sollbruchvertiefung 7 liegt als Perforation vor. Dabei weist das über das Metall-Keramik-Substrat 1 verfahrene Laserlicht 10 eine Bearbeitungsgeschwindigkeit zwischen 0,1 und 2 m/s, bevorzugt zwischen 0,8 und 1,5 m/s auf. Alternativ ist es vorstellbar, dass das Metall-Keramik-Substrat 1 verschoben wird, um die Position des auf das Metall-Keramik-Substrat 1 treffenden Laserlichts 10 zu verändern.

Zur Ausrichtung des Laserlichts 10 ist es insbesondere vorgesehen, dass das Laserlicht 10 auf ein Spiegelelement 30 gerichtet wird. An dem Spiegelelement 30 wird das Laserlicht 10 reflektiert und trifft anschließend auf das Metall-Keramik-Substrat 1. Dabei ist es insbesondere vorgesehen, dass das Spiegelelement 30 schwenkbar gelagert ist, insbesondere um mindestens zwei Achsen schwenkbar gelagert ist, um das Laserlicht 10 auf einen bestimmten Behandlungsbereich bzw. bestimmte Bereiche auf dem Metall-Keramik-Substrat 1 auszurichten. Weiterhin ist es bevorzugt vorgesehen, dass eine Linse 20, vorzugsweise eine fΘ-Linse, zwischen dem Spiegelelement 30 und dem Metall-Keramik-Substrat 1 angeordnet ist. Insbesondere erstreckt sich die Linse 20 entlang einer in der wesentlich senkrecht zur Auftreffrichtung des Laserlichts 10 verlaufenden Ebene im Wesentlichen über eine Länge, die der Länge und/oder Breite des Metall-Keramik-Substrates 1, insbesondere als Großkarte, entspricht. Mit anderen Worten: das über das Metall-Keramik-Substrat 1 fahrende Laserlicht 10 durchläuft unabhängig vom Bearbeitungsbereich stets dieselbe Linse 20.

Es hat sich dabei als besonders vorteilhaft herausgestellt, eine Linse 20 zu verwenden, deren Brennweite größer als 300 mm, bevorzugt größer als 350 mm und besonders bevorzugt größer als 420 mm ist. Das Anordnen der Linse 20 in einem Abstand von Metall-Keramik-Substrat 1, der im Wesentlichen der Brennweite der Linse 20 entspricht, ermöglicht es dann Sollbruchstellen bzw. Sollbruchvertiefungen 7 zu erzeugen, die gegenüber einer senkrechts zur Haupterstreckungsebene HSE des Metall-Keramik-Substrats 1 verlaufenen Lotrichtung vergleichsweise gering geneigt sind. Andernfalls wäre mit einem Neigungswinkel, der im Wesentlichen V-förmige bzw. kerben-förmigen Sollbruchvertiefungen 7 zu rechnen. Dies gilt insbesondere für Sollbruchvertiefungen 7, die am Rand des Metall-Keramik-Substrats 1 entstehen. Eine solche Schräglage wird dabei insbesondere dadurch bedingt, dass das Laserlicht 10 bzw. die Laserstrahlen über die gesamte Ausdehnung des Metall-Keramik-Substrats 1 gesehen nicht gleichmäßig senkrecht auf das Metall-Keramik-Substrat 1 auftreffen können.

Durch die Verwendung der Brennweite größer als 300 mm wird jedoch diese Schrägstellung, insbesondere in den Randbereichen des Metall-Keramik-Substrats 1 derart reduziert, dass ein Neigungswinkel, gemessen bzw. bezogen auf die Lotrichtung des Metall-Keramik-Substrats 1, kleiner ist als 12°, besonders bevorzugt kleiner als 10°. Insbesondere ist festzustellen, dass eine Abweichung des Neigungswinkels im Vergleich zu der Ausrichtung der Sollbruchvertiefung 7 in der Mitte des Metall-Keramik-Substrats 1 nicht größer wird als 12°. Dadurch ist es in vorteilhafter Weise möglich, Sollbruchvertiefungen 7 zu erstellen, deren Bruchverhalten im Wesentlichen über das gesamte Metall-Keramik-Substrat 1 homogen verteilt ist.

Ferner ist eine Absaugvorrichtung 25 vorgesehen. Die Absaugvorrichtung 25 ist dabei seitlich versetzt zum Metall-Keramik-Substrat 1 bzw. zum Halteelement 40 angeordnet. Die Absaugvorrichtung 25 weist eine Öffnung auf, durch die ein Gas angesaugt werden kann. Insbesondere dient die Absaugvorrichtung 25 dazu, dass sublimierte Teilchen während des Bearbeitungsprozesses von der Oberfläche oder der Oberseite des Metall-Keramik-Substrats 1 abgesaugt werden. Diese sublimierten Teilchen aus Keramik sind Resultat einer Plasmabildung bzw. einer Plasmaflamme 6, die im Rahmen der Bearbeitung des Metall-Keramik-Substrats 1 mittels Ultrakurzpulslaserslichts entsteht. Neben einer seitlichen Anordnung ist auch eine Anordnung der Absaugvorrichtung 25 oberhalb des zu zerteilenden Metall-Keramik-Substrats 1 vorstellbar, bei der die Öffnung auf das Metall-Keramik-Substrat 1 gerichtet ist.

Insbesondere ist es vorgesehen, dass das Metall-Keramik-Substrat 1 im Rahmen der Herstellung der Sollbruchvertiefung 7 zeitlich vor einem Bearbeiten und/oder während des Bearbeitens und/oder nach dem Bearbeiten mit dem Laserlicht 10 zur Herstellung der Sollbruchvertiefung 7 einer Temperaturbehandlung unterzogen wird. Insbesondere ist die Temperaturbehandlung dazu ausgelegt, die Temperaturentwicklung im Metall-Keramik-Substrat 1 derart zu steuern, dass plötzliche bzw. starke Temperaturänderungen vermieden werden. Dies reduziert mit Vorteil die Ausbildung von thermomechanisch induzierten Spannungen im Metall-Keramik-Substrat 1. Dies wiederrum führt dazu, dass die Temperaturwechselbeständigkeit des gefertigten, insbesondere zerteilten, Metall-Keramik-Substrats 1 verbessert wird, die Neigung zum Muschelbruch verringert wird und die Neigung zu insbesondere senkrecht verlaufenden Rissen verringert werden kann.

Insbesondere versteht der Fachmann unter "im Rahmen der Herstellung der Sollbruchvertiefung", dass die Temperaturerhöhung für das Bearbeiten mit dem Laserlicht 10 erfolgt und sich nicht auf Temperaturerhöhungen bezieht, die im Vorfeld, beispielswiese beim Anbinden der Metallschicht an die Keramikschicht im Rahmen eines DCB-Verfahrens und/oder Aktivlötverfahrens, oder nach Fertigung der Metall-Keramik-Substrate 1 auftreten, beispielsweise bei sich im Betrieb auftretenden Wärmeentwicklungen. Hierzu erfolgt beispielsweise ein Erwärmen des Metall-Keramik-Substrats 1 innerhalb von 15 Minuten, vorzugsweise 10 Minuten und besonders bevorzugt von 5 Minuten vor dem Bearbeiten 103 des Metall-Keramik-Substrats 1 zur Herstellung der Sollbruchvertiefung 7. Gleiches gilt für die Temperaturbehandlung nach dem Bearbeiten mit dem Laserlicht 10.

Beispielsweise wird hierzu das Metall-Keramik-Substrat 1 vor der Bearbeitung bzw. vor dem Bearbeiten mit dem Laserlicht 10 erwärmt, insbesondere auf eine Temperatur größer als 40 °C, bevorzugt größer als 80 ° C und besonders bevorzugt größer als 150 °C. Insbesondere ist es dabei vorgesehen, dass das Erwärmen 102 dazu führt, dass der Wärmeeintrag, der durch den Laserpuls selbst erfolgt und vorzugsweise einen kurzfristigen Wärmeintrag zur Folge hat, im Verhältnis reduziert ist. Insbesondere erfolgt hierzu die Temperaturbehandlung mit einer Erwärm-Rate von weniger als 5 °C/min, bevorzugt weniger als 3 °C/min und besonders bevorzugt von weniger als 0,5 °C/min.

Bevorzugt ist es vorgesehen, dass ein Abkühlen mit einer Abkühlrate von weniger als 4 °C/min, bevorzugt weniger als 2 °C/min und besonders bevorzugt weniger als 0,5 °C/min erfolgt. Unter einer Temperaturbehandlung während des Bearbeitens des Metall-Keramik-Substrats 1 ist insbesondere zu verstehen, dass beispielsweise bei einer mehrfachen Überfahrt einer Position der Laserstrahl bzw. das Laserlicht 10 dieselbe Position bei einer ersten Überfahrt passiert und anschließend bei einer zweiten Überfahrt. Durch einen gezielt einstellbaren zeitlichen Abstand zwischen der ersten Überfahrt und der zweiten Überfahrt kann dabei gezielt ein Abkühlen des Metall-Keramik-Substrats 1 während des Bearbeitens erursacht werden. Alternativ oder ergänzend ist es auch vorstellbar, dass zusätzlich zu dem Einstellen des Zeitintervalls bis zur zweiten Überfahrt das Metall-Keramik-Substrat 1 zusätzlich gekühlt wird. Dadurch lässt sich das Zeitintervall bis zur zweiten Überfahrt verkürzen, wodurch der gesamte Fertigungsprozess für das Herstellen bzw. Bearbeiten des Metall-Keramik-Substrats 1 unter Bildung der Sollbruchvertiefung 7 beschleunigt wird.

Um gezielt eine Temperaturbehandlung des Metall-Keramik-Substrats 1 vorzunehmen, ist es beispielsweise vorstellbar, dass das Haltelement 40 beispielsweise Heizelemente 50 aufweist, die bevorzugt in einer senkrecht zur Haupterstreckungsebene HSE verlaufenden Richtung unterhalb der Sollbruchvertiefungen 7 bzw. der geplanten Sollbruchvertiefungen 7 angeordnet sind. Dabei können entsprechende Heizelemente 50, beispielsweise innerhalb des Haltelements 40 angeordnet sein und/oder an einer Außenseite des Halteelements 40 montiert sein. Beispielsweise grenzen die Heizelemente 50 unmittelbar an das Metall-Keramik-Substrat 1 an, wenn das Haltelement 40 mit dem Metall-Keramik-Substrat bestückt ist. Weiterhin ist es bevorzugt vorgesehen, dass das Haltelement 40 das Metall-Keramik-Substrat 1 form- und/oder kraftschlüssig in einer parallel zur Haupterstreckungsebene HSE verlaufenden Richtung fixiert. Dadurch kann das Haltelement 40 zusätzlich zur Positionierung des Metall-Keramik-Substrats 1 herangezogen werden. Alternativ zur Ausbildung von Heizelementen 50 innerhalb oder an der Außenseite des Haltelements 40 ist es alternativ auch vorstellbar und/oder ergänzend vorstellbar, dass zum Erwärmen und/oder Abkühlen des Metall-Keramik-Substrats 1 das gesamte Halteelement 40 erwärmt und/oder gezielt abgekühlt wird. Hierzu ist das Haltelement 40 vorzugsweise aus einem Material mit einer vergleichsweise hohen Wärmeleitfähigkeit hergestellt, insbesondere einer Wärmeleitfähigkeit, die größer als 100 W/mK, bevorzugt größer als 200 W/mK und besonders bevorzugt größer als 400 W/mK ist.

Vorzugsweise wird das Halteelement 40 beispielsweise mittels Heizspiralen bzw. Heizelemente 50 erwärmt, die regelmäßig und/oder unregelmäßig im oder am Halteelement 40 verteilt sind. Vorzugsweise sind die Heizspiralen bzw. Heizelemente 50 in einer senkrecht zur Haupterstreckungsebene HSE verlaufenden Richtung zumindest teilweise deckungsgleich unterhalb der geplanten Sollbruchvertiefung 7 angeordnet.

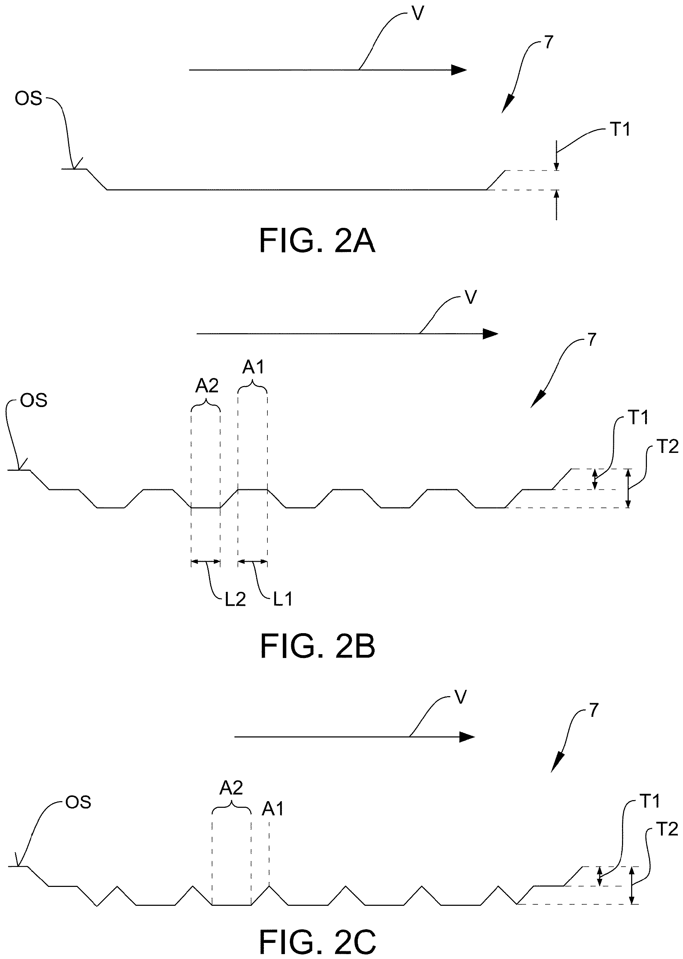

In **Figur 2a** ist eine Sollbruchvertiefung 7 gemäß dem Stand der Technik dargestellt. Insbesondere handelt es sich um eine Schnittansicht entlang der Verlaufsrichtung V, durch die ein Profil der Sollbruchvertiefung 7, insbesondere an dessen Boden bzw. Grund, zu erkennen ist. Die insbesondere in die Keramikschicht eingelassene Sollbruchvertiefung 7 weist dabei eine erste Tiefe T1 auf, gemessen in einer senkrecht zur Haupterstreckungsebene HSE verlaufenden Richtung zwischen einer Oberseite OS des Metall-Keramik-Substrats 1, insbesondere der Keramikschicht des Metall-Keramik-Substrats 1, in die die Sollbruchvertiefung 7 eingelassen ist und dem Boden. Dabei wird die erste Tiefe T1 insbesondere immer bezogen auf eine Ebene, die die Oberseite OS der Keramikschicht gedanklich fortsetzt, d. h. eine Ebene, die parallel zur Oberseite OS verläuft. Das Ausführungsbeispiel nach dem Stand der Technik zeigt, dass die Sollbruchvertiefung 7 gemäß dem Stand der Technik abgesehen von sich schräg zur Haupterstreckungsebene erstreckenden Verläufen am Anfang und am Ende eine im Wesentlichen konstante erste Tiefe T1 aufweist. Dabei versteht der Fachmann unter einer ersten konstanten Tiefe T1 eine solche, die weniger als 10%, weniger als 5% und weniger als 2% entlang der Verlaufsrichtung V variiert.

In **Figur 2b** ist eine Sollbruchvertiefung 7 gemäß einer bevorzugten Ausführungsform der vorliegenden Erfindung dargestellt. Insbesondere weist die Sollbruchvertiefung 7 der Figur 2b einen ersten Abschnitt A1 und einen zweiten Abschnitt A2 auf, wobei eine erste Tiefe T1 des ersten Abschnitts A1 sich unterscheidet von einer zweiten Tiefe T2 des zweiten Abschnitts A2. Dabei wird insbesondere unter einem ersten Abschnitt A1 bzw. zweiten Abschnitt A2 eine solche Teilstrecke der Sollbruchvertiefung 7 bzw. des Bodens der Sollbruchvertiefung 7 verstanden, der entlang der Verlaufsrichtung V im Wesentlichen parallel zu Haupterstreckungsebene HSE verläuft. Mit anderen Worten: von den ersten Abschnitten A1 und zweiten Abschnitten A2 sind in der Sollbruchvertiefung 7 die Abschnitte am Boden bzw. der Sollbruchvertiefung 7 ausgenommen, die im Wesentlichen schräg zur Haupterstreckungsebene HSE verlaufen und beispielsweise die Oberseite OS mit dem ersten Abschnitt A1 und/oder den ersten Abschnitt A1 mit dem zweiten Abschnitt A2 verbinden.

In dem in **Figur 2b** dargestellten Ausführungsbeispiel entspricht eine parallel zur Verlaufsrichtung V bemessene erste Länge L1 des ersten Abschnitts A1 im Wesentlichen einer zweiten Länge L2 des zweiten Abschnitts A2. Weiterhin ist aus der Figur 2b zu erkennen, dass die zweite Tiefe T2 des zweiten Abschnitts A2 im Wesentlichen doppelt so groß ist wie die erste Tiefe T1 im ersten Abschnitt A1. Weiterhin ist es bevorzugt vorgesehen, dass sich der erste Abschnitt A1 und der zweite Abschnitt A2 in Richtung der Verlaufsrichtung V abwechseln und dadurch ein periodisches Muster des Bodens der Sollbruchvertiefung 7 ausbilden. Es hat sich herausgestellt, dass das Ausbilden von Sollbruchvertiefungen 7 mit verschiedenen Tiefen, d. h. mindestens einer ersten Tiefe T1 und einer zweiten Tiefe T2 für einen ersten Abstand A1 und einen zweiten Abschnitt A2, dazu geeignet ist, eine ausreichende Stabilität des Metall-Keramik-Substrats 1, insbesondere in Form einer Großkarte, bereitzustellen, wodurch insbesondere dessen Transport erlaubt. Gleichzeitig lassen die unterschiedlichen Tiefen T1, T2 ein nahezu ausschlussfreies Zerbrechen entlang der Sollbruchvertiefung 7 zu.

Insbesondere ist es vorgesehen, dass der Boden der Sollbruchvertiefung 7 entlang der Verlaufsrichtung V durchgehend, insbesondere kontinuierlich periodisch moduliert ist, um so einen ersten Abschnitt A1 und einen zweiten Abschnitt A2 auszubilden. Insbesondere ist es vorgesehen, dass der Boden in der Schnittansicht, die senkrecht zur Haupterstreckungsebene HSE verläuft und durch die Verlaufsrichtung V verläuft, einen trapezartigen und/oder dreieckartigen Querschnitt aufweist.

Zur Herstellung einer solchen Sollbruchvertiefung 7 ist es beispielsweise vorstellbar, dass das Laserlicht 10 in den zweiten Abschnitten A2 öfter über die Keramikschicht gefahren wird als im ersten Abschnitt A1. Alternativ ist es vorstellbar, dass nach Herstellung einer Vertiefung mit einer ersten Tiefe T1, ein Verschattungselement, insbesondere ein entsprechend gemustertes Verschattungselement, auf die Keramikschicht aufgelegt wird, sodass Licht nur noch durch die nicht verschatteten Bereiche im Verschattungselement auf die Keramikschicht trifft und dort ein Abtrag des Keramikmaterials veranlasst. Auf diese Weise lassen sich entsprechend modulierte Sollbruchvertiefungen 7 realisieren.

In dem in **Figur 2c** dargestelltem Ausführungsbeispiel der vorliegende Erfindung ist es weiterhin vorgesehen, dass die zweite Länge L2 des zweiten Abschnitts A2 größer ist als die erste Länge L1 des ersten Abschnitts A1. Insbesondere ist es vorgesehen, dass der erste Abschnitt A1 im Wesentlichen punktförmig ist, sodass sich ein dreieckartiger Verlauf am Boden der Sollbruchvertiefung 7 ausbildet.

### Bezugszeichenliste:

- 1: Metall-Keramik-Substrat
- 6: Plasmaflamme
- 7: Sollbruchvertiefung
- 10: Laserlicht
- 20: Linse
- 25: Absaugvorrichtung
- 30: Spiegelelement
- 50: Heizelement
- A1: erste Abschnitt
- A2: zweiter Anschnitt
- T1: erste Tiefe
- T2: zweite Tiefe
- V: Verlaufsrichtung
- OS: Oberseite
- HSE: Haupterstreckungsebene

## Patentansprüche

1. Verfahren zum Bearbeiten eines Metall-Keramik-Substrats (1), insbesondere zum Herstellen einer Sollbruchvertiefung, umfassend:
- Bereitstellen eines Metall-Keramik-Substrats (1) und
- Ausbilden einer Sollbruchvertiefung (7) im Metall-Keramik-Substrat (1) wobei die Sollbruchvertiefung (7) entlang ihrer Verlaufsrichtung (V) mindestens einen ersten Abschnitt (A1) mit einer ersten Tiefe (T1) und einen mindestens zweiten Abschnitt (A2) mit einer zweiten Tiefe (T2) aufweist, wobei eine zweite Tiefe (T2) realisiert wird, die sich von der ersten Tiefe (T1) unterscheidet, **dadurch gekennzeichnet, dass** die ersten Abschnitte (A1) und die zweiten Abschnitte (A2) außerhalb von Kreuzungspunkten zweier Sollbruchvertiefungen (7) realisiert werden, die erste Tiefe (T1) im ersten Abschnitt (A1) über eine in Verlaufsrichtung (V) der Sollbruchvertiefung (V) bemessene erste Länge (L1) und die zweite Tiefe (T2) im zweiten Abschnitt (A2) über eine in Verlaufsrichtung (V) der Sollbruchvertiefung (V) bemessene zweite Länge (L2) im Wesentlichen konstant bleiben.

2. Verfahren gemäß Anspruch 1, wobei ein Verhältnis einer ersten Tiefe (T1) zu einer zweiten Tiefe (T2) einen Wert zwischen 0,2 und 0,8, bevorzugt zwischen 0,3 und 0,7 und besonders bevorzugt zwischen 0,4 und 0,6 annimmt.

3. Verfahren gemäß Anspruch 1, wobei ein Verhältnis der ersten Länge (L1) zu der zweiten Länge (L2) kleiner als 1,5, bevorzugt kleiner als 0,5 und besonders bevorzugt kleiner als 0,25 ist.

4. Verfahren gemäß einem der vorhergehenden Ansprüche, wobei sich der erste Abschnitt (A1) und der zweite Abschnitt (A2) periodisch abwechseln.

5. Verfahren gemäß einem der vorhergehenden Ansprüche, wobei die Sollbruchvertiefung (7) in einer senkrecht zur Verlaufsrichtung (V) verlaufenden Richtung eine dritte Tiefe aufweist, die sich vorzugsweise von der ersten Tiefe (T1) und/oder der zweiten Tiefe (T2) unterscheidet.

6. Verfahren gemäß einem der vorhergehenden Ansprüche, wobei die Sollbruchvertiefung (7) in einer parallel zur Verlaufsrichtung (V) verlaufenden Ebene eine trapezartige oder dreieckartige Form aufweist.

7. Verfahren gemäß einem der vorhergehenden Ansprüche, wobei die Sollbruchvertiefung (7) durch Bearbeiten mittels Laserlichts (10), insbesondere eines Ultrakurzpuls (UKP)-Lasers, hergestellt wird, wobei im Rahmen des Ausbildens der Sollbruchvertiefung (7) das Metall-Keramik-Substrat (1) vor dem Bearbeiten, während des Bearbeitens und/oder nach dem Bearbeiten einer Temperaturbehandlung unterzogen wird, wobei insbesondere ein Abkühlen, insbesondere nach dem Bearbeiten, mit einer Abkühlrate von weniger als 4 °C/min, bevorzugt weniger als 2 °C/min und besonders bevorzugt weniger als 0,5 °C/min erfolgt.

8. Metall-Keramik-Substrat mit einer Sollbruchvertiefung (7) hergestellt mit einem Verfahren gemäß einem der Ansprüche 1 bis 6.

## Claims

1. Method for processing a metal-ceramic substrate (1), in particular for forming a predetermined breaking recess, comprising:
- providing a metal-ceramic substrate (1) and
- forming a predetermined breaking recess (7) in the metal-ceramic substrate (1) wherein the predetermined breaking recess (7) hasat least a first section (A1) with a first depth (T1) and at least a second section (A2) with a second depth (T2) along its direction of extension, wherein a second depth (T2) is formed that differs from the first depth (T1), **characterised in that** the first sections (A1) and the second sections (A2) are formed outside of the intersection points of two predetermined breaking recesses (7), the first depth (T1) in the first section (A1) via a first length (L1) measured in the direction of extension (V) of the predetermined breaking recess (V) and the second depth (T2) in the second section (A2) via a second length (L2) measured in the direction of extension (V) of the predetermined breaking recess (V) remain essentially constant.

2. Method according to claim 1, wherein a ratio of a first depth (T1) to a second depth (T2) has a value between 0.2 and 0.8, preferably between 0.3 and 0.7, and most preferably between 0.4 and 0.6.

3. Method according to claim 1, wherein a ratio of the first length (L1) to the second length (L2) is less than 1.5, more preferably less than 0.5 and most preferably less than 0.25.

4. Method according to any of the preceding claims, wherein the first section (A1) and the second section (A2) periodically alternate.

5. Method according to one of the preceding claims, wherein the predetermined breaking recess (7) has a third depth in a direction perpendicular to the direction of extension (V), which depth preferably differs from the first depth (T1) and/or the second depth (T2).

6. Method according to one of the preceding claims, wherein the predetermined breaking recess (7) has a trapezoidal or triangular shape in a plane running parallel to the direction of progression (V).

7. Method according to one of the preceding claims, wherein the predetermined breaking recess (7) is formed by processing by means of laser light (10), in particular an ultrashort pulse (UKP) laser, wherein in the context of forming the predetermined breaking recess (7), the metal-ceramic substrate (1) is subjected to a temperature treatment before the processing, during the processing and/or after the processing, wherein cooling, in particular after the processing, is carried out at a cooling rate of less than 4°C/min, preferably less than 2°C/min and most preferably less than 0.5°C/min.

8. Metal-ceramic substrate having a predetermined breaking recess (7) formed by a method according to one of Claims 1 to 6.

## Revendications

1. Procédé d'usinage d'un substrat métal-céramique (1), en particulier pour créer une cavité destinée à la rupture, comprenant :
- fournir un substrat métal-céramique (1), et
- créer une cavité destinée à la rupture (7) dans le substrat métal-céramique (1), la cavité destinée à la rupture (7) présentant le long de sa direction d'extension (V) au moins une première portion (A1) avec une première profondeur (T1) et au moins une deuxième portion (A2) avec une deuxième profondeur (T2), en réalisant une deuxième profondeur (T2) différente de la première profondeur (T1), **caractérisé en ce que** les premières portions (A1) et les deuxièmes portions (A2) sont réalisées en dehors des points de croisement de deux cavités destinées à la rupture (7),
la première profondeur (T1) dans la première portion (A1) reste sensiblement constante sur une première longueur (L1) mesurée dans la direction (V) d'extension de la cavité destinée à la rupture (V), et la deuxième profondeur (T2) dans la deuxième portion (A2) reste sensiblement constante sur une deuxième longueur (L2) mesurée dans la direction (V) d'extension de la cavité destinée à la rupture (V).

2. Procédé selon la revendication 1,
dans lequel un rapport d'une première profondeur (T1) sur une deuxième profondeur (T2) prend une valeur comprise entre 0,2 et 0,8, de préférence entre 0,3 et 0,7, et de manière particulièrement préférée entre 0,4 et 0,6.

3. Procédé selon la revendication 1,
dans lequel un rapport de la première longueur (L1) sur la deuxième longueur (L2) est inférieur à 1,5, de préférence inférieur à 0,5 et de manière particulièrement préférée inférieur à 0,25.

4. Procédé selon l'une des revendications précédentes,
dans lequel la première portion (A1) et la deuxième portion (A2) alternent périodiquement.

5. Procédé selon l'une des revendications précédentes,
dans lequel la cavité destinée à la rupture (7) présente, dans une direction perpendiculaire à la direction d'extension (V), une troisième profondeur qui est de préférence différente de la première profondeur (T1) et/ou de la deuxième profondeur (T2).

6. Procédé selon l'une des revendications précédentes,
dans lequel la cavité destinée à la rupture (7) présente une forme trapézoïdale ou triangulaire dans un plan parallèle à la direction d'extension (V).

7. Procédé selon l'une des revendications précédentes,
dans lequel la cavité destinée à la rupture (7) est créée par usinage au moyen d'une lumière laser (10), en particulier d'un laser à impulsions ultracourtes (UKP), dans le cadre de la création de la cavité destinée à la rupture (7), avant l'usinage, pendant l'usinage et/ou après l'usinage, le substrat métal-céramique (1) est soumis à un traitement thermique, en particulier à un refroidissement, en particulier après l'usinage, à une vitesse de refroidissement inférieure à 4 °C/min, de préférence inférieure à 2 °C/min et de manière particulièrement préférée inférieure à 0,5 °C/min.

8. Substrat métal-céramique présentant une cavité destinée à la rupture (7) créée par un procédé selon l'une des revendications précédentes.
